# EUROPEAN PATENT APPLICATION

(11) **EP 4 803 940 A1**
(43) Date of publication of application: **09.09.2026**
(21) Application number: 25161310.5
(22) Date of filing: 03.03.2025
(51) Int. Cl.: G02B 6/12, G02B 6/122, G02B 6/132, G02B 6/136

(54) **INTEGRATED PHOTONIC PLATFORM AND CIRCUIT AND FABRICATION METHOD**

(71) Applicant: LiGenTec SA, 1024 Ecublens (CH)
(72) Inventor: Sacchetto, Davide, 1462 Yvonand Vaude (CH); Carriera, José, 1024 Ecublens (CH); Zervas, Michael, 92140 Clamart (FR)
(74) Representative: Isarpatent

(57) **Abstract**

The present invention provides a method for fabricating an integrated photonic platform comprising providing a substrate, depositing a lower cladding layer made of a first material on the substrate, depositing a photonic layer made of a second material on the lower cladding, and patterning the photonic layer to form a waveguide portion and an etch stop portion, wherein the waveguide portion is formed to guide a defined optical mode substantially inside the second material, wherein the etch stop portion is formed as a defined area of the photonic layer. The method further includes etching of a portion of an upper cladding layer made of the first material on the photonic layer to expose at least partly the etch stop portion of the photonic layer, thereby forming a cavity, and etching the exposed part of the etch stop portion of the photonic layer to expose the lower cladding layer. Further, the present invention provides a corresponding integrated photonic platform and a corresponding integrated photonic circuit as well.

## Description

### TECHNICAL FIELD OF THE INVENTION

The invention relates to an integrated photonic platform and an integrated photonic circuit, as well as corresponding methods for fabricating such an integrated photonic platform and integrated photonic circuit.

### TECHNICAL BACKGROUND

For integrating active components on a photonic platform, it is paramount to minimize any spatial misalignment that might occur between optical modes traveling through a waveguide on the photonic platform and another optical mode traveling to and from an active subcomponent integrated on a photonic substrate. For efficient coupling of optical modes into the waveguide, it requires a precise placement of the active components relative to the waveguide on the photonic platform to minimize coupling losses. For the in-plane direction, masking and other techniques are regularly used for precisely the active component on the platform. However, the control in the vertical direction, i.e. the depth direction towards the substrate, for such placements remains challenging.

Therefore, it is an objective of the invention to provide an improved method for placing active components on an integrated photonic platform.

### SUMMARY OF THE INVENTION

According to the invention, this problem is solved in each case by the subject matters of the independent claims.

According to a first aspect of the invention, a method for fabricating an integrated photonic platform is provided. The method for fabricating an integrated photonic platform comprises providing a substrate; depositing a lower cladding layer made of a first material on the substrate; depositing a photonic layer made of a second material on the lower cladding; and patterning the photonic layer to form a waveguide portion and an etch stop portion, wherein the waveguide portion is formed to guide a defined optical mode substantially inside the second material, wherein the etch stop portion is formed as a defined area of the photonic layer.

According to a second aspect of the invention, a method for fabricating an integrated photonic circuit is provided. The method for fabricating an integrated photonic circuit comprises providing an integrated photonic platform, in particular by the inventive method for fabricating an integrated photonic platform, comprising a waveguide structure disposed on a substrate. The waveguide structure includes a lower cladding layer made of a first material disposed on the substrate, a photonic layer made of a second material disposed on the lower cladding, and an upper cladding layer made of the first material on the photonic layer. The photonic layer comprises a waveguide portion and an etch stop portion, wherein the waveguide portion is configured to guide a defined optical mode substantially inside the second material. The etch stop portion is configured as a defined area of the photonic layer. The first material is configured as an etch stop for a first etchant and the second material configured as an etch stop for a second etchant. The method further comprises etching, by using the second etchant, a portion of the upper cladding layer to expose at least partly the etch stop portion of the photonic layer, thereby forming a cavity; and etching, by using the first etchant, the exposed part of the etch stop portion of the photonic layer to expose the lower cladding layer.

According to a third aspect of the invention, an integrated photonic platform is provided. The integrated photonic platform comprises a substrate, a lower cladding layer made of a first material disposed on the substrate, and a photonic layer made of a second material disposed on the lower cladding layer. The photonic layer includes a waveguide portion and an etch stop portion. The waveguide portion is configured to guide a defined optical mode substantially inside the second material. The etch stop portion is a defined area of the photonic layer.

According to a fourth aspect of the invention, an integrated photonic circuit is provided. The integrated photonic platform comprises a waveguide structure disposed on a substrate, the waveguide structure including a lower cladding layer made of a first material disposed on the substrate, a photonic layer made of a second material disposed on the lower cladding, and an upper cladding layer made of the first material on the photonic layer. The photonic layer has a waveguide portion configured to guide a defined optical mode substantially inside the second material, wherein the second material is configured as an etch stop layer for a second etchant. A cavity is formed in the waveguide structure, the cavity extending in the upper cladding layer and the photonic layer to expose the lower cladding layer.

A fundamental idea of the present invention is to employ a part of the photonic layer as an etch stop for etching, in a first etching step, down to a well-defined depth, which is otherwise difficult due to a varying thickness of the upper cladding layer. By a second etching step using a different etchant, merely the etch stop part of the photonic layer, which has a well-defined thickness, is etched, so that the etch precisely stops at the lower cladding layer.

A fundamental concept of the invention is to define a part or portion of the photonic layer to be used as etch stop when etching a cavity into the upper cladding layer. This portion can be used to expose a defined part of the waveguides within the photonic layer. This might be required e.g. in bio-sensing applications, where the method may be applied to remove most of the upper cladding to expose a second waveguide below the etch stop portion having bio-molecules, to enable bio-sensing applications.

The etch stop portion may also be used at least partly as a space holder for later placing an optical component after the etch stop portion itself has been removed by a second etch step. This etch stop portion of the photonic layer is defined adjacent to the waveguide so that by placing the optical component in its place, an optical mode is able to couple from the active component into the waveguide and vice versa.

A particular advantage in the solution according to an aspect of the invention is that the depth of the etching process can be controlled with a particularly high precision. Therefore, the coupling of active components, such as lasers, into the waveguide portion of the photonic layer is very efficient. Thus, the photonic layer is utilized as both, as a photonic waveguide and as an etch stop layer for integration, thus allowing the integration of an external subcomponent into a formed cavity with virtually zero vertical misalignment.

It is understood that "layer" may consist of a plurality of sub-layers, and that a layer disposed on the substrate or another layer may involve other layers between these layers. The photonic layer may thus comprise plurality of waveguide portions defining a plurality of waveguide cores of a plurality of waveguides. These can be arranged next to each other or above or below each other in a stack of layers comprising a plurality of cladding layers as well. A plurality of such photonic layers can be provided as well. It is further understood that the naming of the photonic devices, i.e. the integrated photonic platform and the integrated photonic circuit, has been chosen such as the platform indicates the device before any local etching process of the cladding layers has been performed. Thus, the integrated photonic platform is provided for fabricating the integrated photonic circuit by the applying local etching processes using the first and second etchants, as described by the respective method according to the second aspect of the invention.

For manufacturing the integrated photonic circuit usable for the application, it is of importance that the first material is chosen to be an etch stop for a first etchant and the second material to be an etch stop for a second etchant. In the inventive method, these characteristics of the two materials are chosen to selectively etch a defined area to a defined depth. A typical first etchant would be e.g. Hydrofluoric Acid, HF, or selective dry etching, e.g. dry plasma etching, using CH₄, CHF₃, SF₆ etc., or a combination thereof, while a typical second etchant would be e.g. a phosphoric acid, H₃PO₄, or a combination thereof. The first etchant and second etchant may also comprise similar parts or components.

According to an embodiment of the first aspect of the invention, the etch stop portion is formed as a defined area configured as space holder for integrating an optical component. Thus, the etch stop portion in this case does not define a waveguide for a particularly defined mode but may rather be an area, which is to be etched afterwards. The optical component may be a passive optical component such as a micro lens or a micro mirror, or an active component, such as a laser or a detector. An active component typically has an active region that requires to be coupled to the waveguide portion of the photonic layer, as will be described further below.

According to an embodiment of the first aspect of the invention, the first material is silicon dioxide, SiO2, and the second material is silicon nitride, SiN. These two materials provide a good refractive index contrast for optical modes to propagate in the photonic layer with low losses.

According to an embodiment of the first aspect of the invention, the method further comprises annealing the waveguide portion at a temperature greater or equal to 900 degree Celsius. An important technical effect of this disclosure results from this annealing process. By annealing typical etch stop layers when annealed at high temperature, a relatively high roughness of an exposed surface is typically caused. However, in particular by using a SiN layer as photonic etch stop portion, the annealing step has the dual, or synergetic, advantage of reducing propagation losses in the silicon nitride material, i.e. by causing residual hydrogen to effuse out, and not to inter-mix with adjacent layers such as silicon dioxide cladding. Therefore, this process allows for an exposed surface post-annealing conserving a very low surface roughness, which is desirable for bonding and reduced propagation loss.

According to an embodiment of the first aspect of the invention, the method further comprises depositing an upper cladding layer made of the first material on the photonic layer to define a waveguide structure comprising the lower cladding layer, the photonic layer and the upper cladding layer. Compared to an aerial top surface, the control of the optical modes propagating substantially in the photonic layer can be improved.

According to an embodiment of the second aspect of the invention, the method further comprises etching, by using the first etchant, a portion of the lower cladding layer inside the cavity to a predetermined depth. This is required, for example, for active components having an active region within a stack of layers, where the active region is within the stack and not necessarily immediately over the lowest cladding layer. The active region, which is supposed to couple into the waveguide portion, thus requires a certain depth in the lower cladding layer for efficient optical coupling, which might be known in literature as butt-coupling or edge-coupling. By this etching process, the depth can be controlled very precisely, thus enabling an efficient edge coupling for virtually any height of the active region of the active component.

According to an embodiment of the second aspect of the invention, when etching the upper cladding layer by using the second etchant, etching the upper cladding layer on a removed part of the photonic layer such that a portion of the lower cladding is exposed adjacent to the etch stop portion and the waveguide portion. The exposed portion of the lower cladding layer may be arranged on lateral sides of a portion of the waveguide, which is exposed after etching the upper cladding layer using the second etchant. This supports the alignment for etching the etch stop portion to be perpendicular (or to be angled by a predefined angle for reduced reflections) to the waveguide portion.

According to an embodiment of the second aspect of the invention, when etching the etch stop portion, a waveguide tip suitable for optical edge coupling is formed in the cavity. The waveguide tip thus represents the interface for an optical mode propagating from the waveguide portion of the photonic layer to an active region of an active component, or vice versa.

According to an embodiment of the second aspect of the invention, the method further comprises bonding an optical component having an active region on a surface of the exposed lower cladding such that an optical mode from the waveguide portion is optically coupled to the active region of the active component. The optical component may be a passive optical component such as a micro lens or micro mirror, or it may be an active component such as a laser, an electro-optic modulator or any other photonic component, such as e.g. detectors, filters, etc.. In this way, the inventive integrated photonic platform and circuitry provides the possibility to place precisely various active components and applications.

According to an embodiment of the second aspect of the invention, the active region of the active component is optically coupled to the waveguide portion through the waveguide tip formed at the edge of the cavity.

According to an embodiment of the third aspect of the invention, the integrated photonic platform further comprises an upper cladding layer made of the first material on the photonic layer defining a waveguide structure comprising the lower cladding layer, the photonic layer and the upper cladding layer.

The first material is silicon dioxide, SiO2, and the second material preferably is silicon nitride, SiN. As described above, these two materials provide a good refractive index contrast for optical modes to propagate in the photonic layer with low losses.

According to an embodiment of the fourth aspect of the invention, the cavity extends into the lower cladding layer by a predetermined depth. As described above, this is required e.g. for active components having an active region within a stack of layers, where the active region is not the most bottom layer in the stack. The active region, which is supposed to couple into the waveguide portion, thus requires a certain depth in the lower cladding layer for efficient coupling. By this etching process, the depth can be controlled very precisely, thus enabling an efficient coupling for virtually any height of the active region of the active component.

According to an embodiment of the fourth aspect of the invention, the integrated photonic circuit further comprises an optical component bonded on a surface of the exposed lower cladding. The optical component may be a passive optical component or an active optical component, as described above. In the latter case, the active component comprises an active region, which is optically coupled to the waveguide portion. The active component may be a laser, an electro-optic modulator or any other photonic component, such as e.g. detectors, active filters, etc..

The above embodiments and further developments can be combined with each other as desired, if appropriate and technically meaningful. In particular, all features of the method for fabricating the integrated photonic platform and circuit are transferable to the integrated photonic platform and circuit, and vice versa. Other possible aspects, further developments and implementations of the invention also include combinations of features of the invention described above or below with regard to the embodiment examples that are not explicitly mentioned. In particular, the skilled person will also add individual aspects as improvements or additions to the respective basic form of the present invention.

Advantageous embodiments and further developments emerge from the description with reference to the figures.

### BRIEF SUMMARY OF THE DRAWINGS

The present invention is explained more specifically below on the basis of the exemplary embodiments indicated in the schematic figures, in which:
Fig. 1 shows a flow chart for a method for fabricating of an integrated photonic platform and integrated photonic circuit according to an embodiment of the invention;
Fig. 2a-b shows a schematic illustration of a side view and a top view of an integrated photonic platform according to an embodiment of the invention;
Fig. 3a-b shows a schematic illustration of a side view and a top view of an integrated photonic platform according to an embodiment of the invention;
Fig. 4a-b shows a schematic illustration of a side view and a top view of an integrated photonic circuit according to an embodiment of the invention;
Fig. 5a-b shows a schematic illustration of a side view and a top view of an integrated photonic circuit according to an embodiment of the invention;
Fig. 6a-b shows a schematic illustration of a side view and a top view of an integrated photonic circuit according to an embodiment of the invention; and
Fig. 7a-b shows a schematic illustration of a side view and a top view of an integrated photonic circuit according to an embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

### DESCRIPTION OF EMBODIMENTS

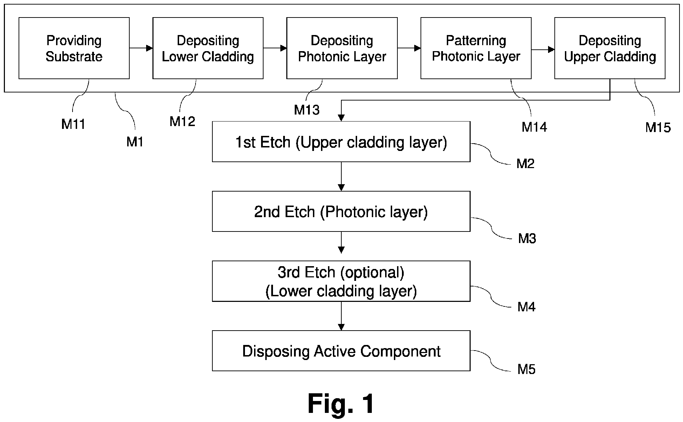

Fig. 1 shows a flow chart for a method for fabricating of an integrated photonic platform and integrated photonic circuit according to an embodiment of the invention.

The method for fabricating an integrated photonic platform 1 comprises the step of providing M11 a substrate 4. The substrate may be any suitable material, e.g. Silicon of any crystalline type from a respective wafer.

In a following step, a lower cladding layer 3 made of a first material is deposited M12 on the substrate 4. Furthermore, a photonic layer 2 made of a second material is deposited M13 on the lower cladding 3. In a preferred embodiment, the first material is silicon dioxide, SiO2, and the second material is silicon nitride, SiN. The second material thus has a higher refractive index than the first material so that the second material can function as a waveguide core for an optical mode substantially propagating in the photonic layer 2.

In a further step, the photonic layer 2 is patterned M14 to form a waveguide portion 21 and an etch stop portion 22. This means that a part of the photonic layer 2 is removed for forming the two portions 21, 22. This may be conducted by an etching process or other means, e.g. laser ablation etc. The waveguide portion 21 is formed to guide a defined optical mode substantially inside the second material. The waveguide portion 21 thus represents the core of a functional photonic circuit to guide a defined mode through the waveguide. The defined mode may be a pure optical mode, or it may be a defined superposition of optical modes, such as e.g. a few-mode waveguide. The etch stop portion 22 is formed as a defined area of the photonic layer 2. In some embodiments, which may be related to bio-sensing applications, it might be required to remove most of the upper cladding to expose bio-molecules in a second waveguide below the etch stop portion 21. This might be used to enable bio-sensing applications detecting the activation of specific bio-molecules in the waveguide portions 21.

In some embodiments, the etch stop portion may be configured as space holder for integrating an optical component 8. In some embodiments, the optical component 8 is a passive optical component, such as a micro lens or micro mirror and configured to couple or uncouple light into or form the waveguide portion of the photonic layer. In some embodiments, the optical component 8 is configured as an active component 8. In the following examples, the etch stop portion 22 has a rectangular or square shape in a top view of the integrated photonic platform 1 to match a footprint of the passive or active component 8. The etch stop portion 22 is supposed to be etched and not intended to guide a defined optical mode.

In preferred embodiments, the method also comprises a step of annealing not shown in Fig. 1 the waveguide portion 21 at a temperature greater or equal to 900 degree Celsius. Due to the annealing process, the propagation loss of the waveguide portion 21 will be reduced to the effusion of hydrogen and the prevention of inter-mixing with the lower cladding layer 3. Furthermore, a low surface roughness will be ensured for the photonic layer 2 and the lower cladding layer 3, which can be advantageous for later bonding steps.

In preferred embodiments of the method for fabricating an integrated photonic platform, an upper cladding layer 5 made of the first material is deposited M15 on the photonic layer 2. By this, a waveguide structure 6 comprising the lower cladding layer 3, the photonic layer 2, in particular excluding the etch stop portion 22, and the upper cladding layer 5 is defined.

By this, an integrated photonic platform 1 is provided by step M1. For manufacturing the final integrated photonic circuit 10 usable for the application, it is of importance that the first material is chosen to be an etch stop for a first etchant and the second material to be an etch stop for a second etchant. In a further step of the method, these characteristics of the two materials are chosen to selectively etch a defined area to a defined depth. A typical first etchant would be e.g. Hydrofluoric Acid, HF, or selective dry etching, e.g. dry plasma etching, using CH₄, CHF₃, SF₆ etc., or a combination thereof, while a typical second etchant would be e.g. a phosphoric acid, H₃PO₄, or a combination thereof. Although the first etchant is different from the second etchant, the first etchant and second etchant may comprise similar parts or components.

Therefore, in the following step, a first etch is conducted. A portion of the upper cladding layer 5 is etched M2 by using the second etchant to expose at least partly the etch stop portion 22 of the photonic layer 2, thereby forming a cavity 7.

In some embodiments, when etching M2 the upper cladding layer 5 by using the second etchant, the upper cladding layer 5 is etched on a removed part of the photonic layer 2 such that a portion 31 of the lower cladding 3 is exposed adjacent to the etch stop portion 22 and the waveguide portion 21. In some of these embodiments, the exposed portion 31 of the lower cladding layer 3 is arranged on lateral sides of a portion 211 of the waveguide portion 21, which is exposed after etching the upper cladding layer 5 using the first etchant. This portion 211 later forms a waveguide tip 212 that allows coupling an optical mode in and out the waveguide portion 21 from or to another optical component 8. The waveguide tip 212 is suitable for optical edge coupling, which is also known as butt-coupling. The exposed portion 31 of the lower cladding layer 31 may be used to make sure that the waveguide portion 211 is aligned with at least one of the cavity 7 sidewalls.

Then, a second etch is conducted M3 using the other first etchant. The exposed part of the etch stop portion 22 of the photonic layer 2 is etched M3 by using the first etchant, to expose the lower cladding layer 3. As described before, in preferred embodiments, when etching M3 the etch stop portion 22, a waveguide tip 212 is formed in the cavity 7, which functions as an interface between the waveguide portion 21 and an active region 81 of an active component 8 as optical component 8 to be placed into the cavity 7.

In preferred embodiments, a portion of the lower cladding layer 3 inside the cavity 7 is further etched M4 by using the second etchant to a predetermined depth D. The depth D can be controlled very precisely by this third etching process. This is regularly required for optical components, in particular active components 8, whose active region is not arranged at the bottom of the component 8.

In a subsequent step of these embodiments, an optical component 8 having an active region 81 is bonded M5 on a surface 32 of the exposed lower cladding 3. In some embodiments, the optical component 8 is an active component 8 having an active region 81. The active component 8 is bonded M5 such that an optical mode from the waveguide portion 21 is optically coupled to the active region 81 of the optical component 8. Known bonding techniques can be applied that form a robust bond between the optical component 8 and the surface 32 of the lower cladding layer 3.

In some embodiments, the active component 8 is a laser comprising a gain region as active region 81. In further embodiments, the active component 8 is an electro-optic modulator, e.g. comprising a Pockels cell as the active region 81. In further embodiments, the active component 8 is a detector.

In these embodiments, typically the active region 81 of the component 8 is optically coupled to the waveguide portion 21 through the waveguide tip 212 formed in the cavity 7.

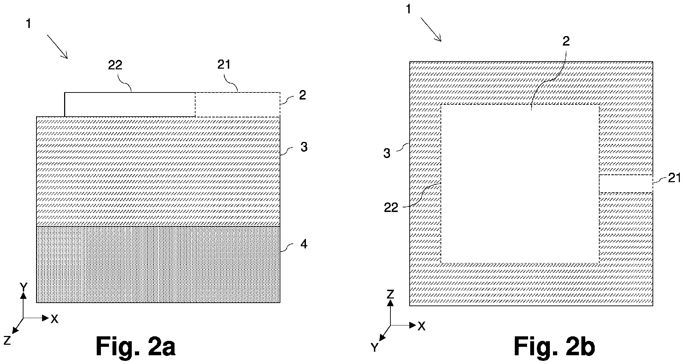

Fig. 2a-b shows a schematic illustration of a side view and a top view of an integrated photonic platform 1 according to an embodiment of the invention.

Fig. 2a shows a side view, i.e. a sectional view in an X-Y-plane of the integrated photonic platform 1, and Fig. 2b shows a top view in an X-Z-plane of the integrated photonic platform 1. The shown embodiment of the integrated photonic platform 1 is based on and compatible with the method for fabricating an integrated photonic platform 1 as described above.

The integrated photonic platform 1 shown in Fig. 2a and 2b comprises a substrate 4. As mentioned before, a suitable substrate may be Silicon. The integrated photonic platform 1 comprises a lower cladding layer 3 made of a first material disposed on the substrate 4. Furthermore, the integrated photonic platform 1 comprises a photonic layer 2 made of a second material disposed on the lower cladding layer 4. In preferred embodiments, the first material is silicon dioxide, SiO2, and the second material is silicon nitride, SiN.

The photonic layer 2 includes a waveguide portion 21 and an etch stop portion 22, wherein the waveguide portion 21 is configured to guide a defined optical mode substantially inside the second material, wherein the etch stop portion 22 is a defined area of the photonic layer 2. In some embodiments, the etch stop portion is configured as a placeholder for an optical component 8. In the shown embodiment, the etch stop portion 22 is a rectangular or square shape in the top view, i.e. X-Z-plane, in Fig. 2b. The waveguide portion 21 is indicated as a waveguide, which may have a cross-sectional area in a Y-Z plane in Fig. 2b suitable for a defined mode, such as for a single mode.

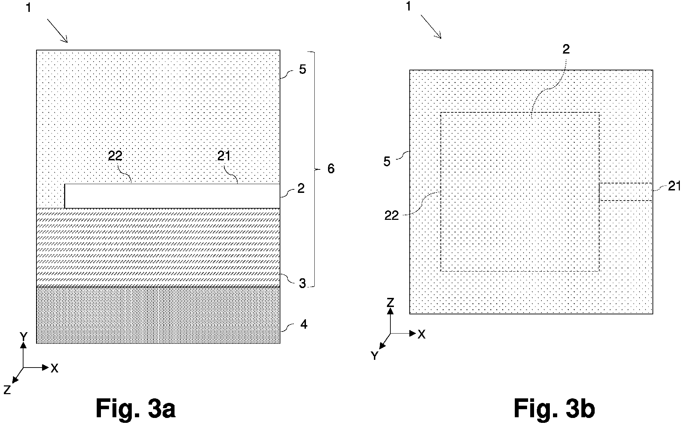

Fig. 3a-b shows a schematic illustration of a side view and a top view of an integrated photonic platform 1 according to an embodiment of the invention.

Fig. 3a shows a side view, i.e. a sectional view in an X-Y-plane of the integrated photonic platform 1, and Fig. 3b shows a top view in an X-Z-plane of the integrated photonic platform 1. The shown embodiment of the integrated photonic platform 1 is based on and compatible with the method for fabricating an integrated photonic platform 1 as described above.

The integrated photonic platform 1 further comprises an upper cladding layer 5, which is made of the first material and deposited on the photonic layer 2. The resulting structure thus defines a waveguide structure 6 comprising the lower cladding layer 3, the photonic layer 2 and the upper cladding layer 5.

As mentioned above, in preferred embodiments, the first material preferably is silicon dioxide, SiO2, and the second material preferably is silicon nitride, SiN. Furthermore, the SiN may be annealed by a temperature of about 900 degree Celsius or greater when exposed. This causes residual hydrogen to effuse out of the material so that propagation loss in the SiN waveguide portion 21 is reduced. It further reduced surface roughness, which limits the inter-mixing with the neighboring SiO2 layers, which is desirable for further bonding processes.

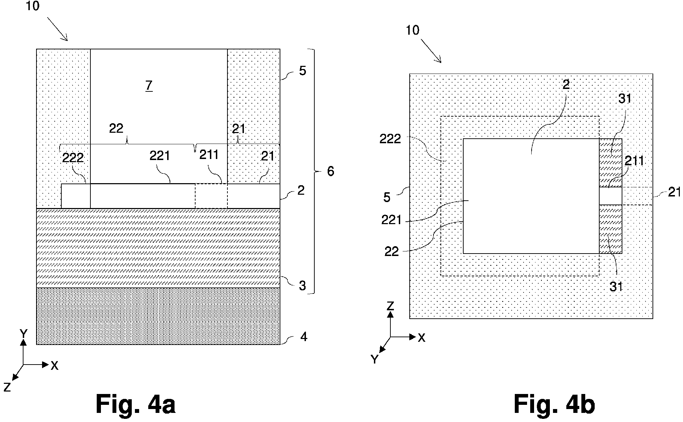

Fig. 4a-b shows a schematic illustration of a side view and a top view of an integrated photonic circuit 10 according to an embodiment of the invention.

Fig. 4a shows a side view, i.e. a sectional view in an X-Y-plane of the integrated photonic circuit 10, and Fig. 4b shows a top view in an X-Z-plane of the integrated photonic circuit 10. The shown embodiment of the integrated photonic circuit 10 is based on and compatible with the method for fabricating an integrated photonic circuit 10 as described above.

The shown integrated photonic circuit 10 is based on the integrated photonic platform 1 as described with reference to Fig. 2 and 3. The integrated photonic circuit 10 comprises a waveguide structure 6 disposed on a substrate 4. The waveguide structure 6 includes a lower cladding layer 3 made of a first material disposed on the substrate 4, a photonic layer 2 made of a second material disposed on the lower cladding 3, and an upper cladding layer 5 made of the first material on the photonic layer 2. As in the previous embodiments, the photonic layer 2 has a waveguide portion 21 configured to guide a defined optical mode substantially inside the second material. In line with the previously described method for fabricating such an integrated photonic circuit, the second material is configured as an etch stop layer for a second etchant.

In Fig. 4a, it is shown that a cavity 7 is formed in the waveguide structure 6. The cavity may be formed by above-described method step M2, in which etching M2, by using the second etchant, through a portion of the upper cladding layer 5 is performed to expose at least partly the etch stop portion 22 of the photonic layer 2. The resulting cavity 7 extending in the upper cladding layer 5. The cavity 7 shown in Fig. 4a may be formed by conducting etching step M2. As such, the integrated photonic circuit 10 shown in Fig. 4a and 4b represents an intermediate product after the above-described method step M2 has been performed.

It is noted that when etching M2 the upper cladding layer 5 by using the second etchant, the upper cladding layer 5 is etched on a removed part of the photonic layer 2 such that a portion 31 of the lower cladding 3 is exposed adjacent to the etch stop portion 22 and the waveguide portion 21. In this embodiment, the exposed portion 31 of the lower cladding layer 3 is arranged on lateral sides of a portion 211 of the waveguide portion 21, which is exposed after etching the upper cladding layer 5 using the second etchant.

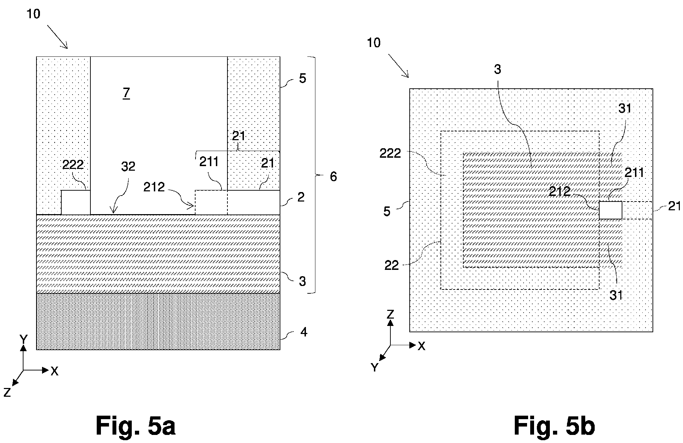

Fig. 5a-b shows a schematic illustration of a side view and a top view of an integrated photonic circuit 10 according to an embodiment of the invention.

Fig. 5a shows a side view, i.e. a sectional view in an X-Y-plane of the integrated photonic circuit 10, and Fig. 5b shows a top view in an X-Z-plane of the integrated photonic circuit 10. The shown embodiment of the integrated photonic circuit 10 is based on and compatible with the method for fabricating an integrated photonic circuit 10 as described above.

The integrated photonic circuit 10 shown in Fig. 5a and 5b represents an intermediate product after the above-described method step M3 has been performed. Here, the exposed part of the etch stop portion 22 of the photonic layer 2 is etched M3, by using the first etchant to expose a surface 32 of the lower cladding layer 3.

It is further noted that not all of the etch stop portion 22 has been etched by the 2^{nd} etching step M3, but an embedded portion 222 is remaining below the upper cladding layer 5 adjacent to the cavity 7. This ensures that in the following etch steps M3 and optionally M4, a predefined depth D of the exposed surface 32 of the lower cladding layer 3 can be formed uniformly.

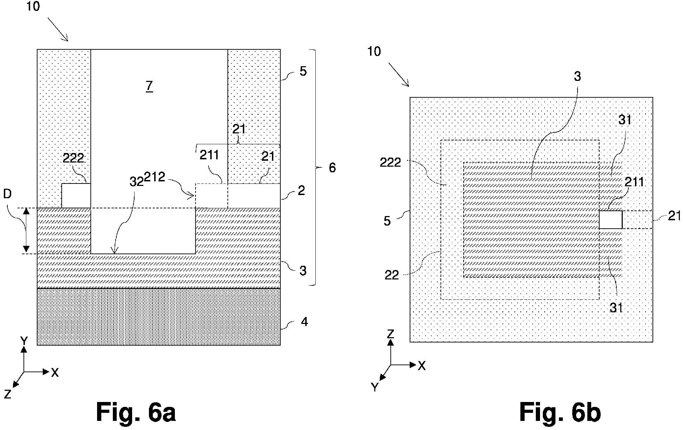

Fig. 6a-b shows a schematic illustration of a side view and a top view of an integrated photonic circuit 10 according to an embodiment of the invention.

Fig. 6a shows a side view, i.e. a sectional view in an X-Y-plane of the integrated photonic circuit 10, and Fig. 6b shows a top view in an X-Z-plane of the integrated photonic circuit 10. The shown embodiment of the integrated photonic circuit 10 is based on and compatible with the method for fabricating an integrated photonic circuit 10 as described above.

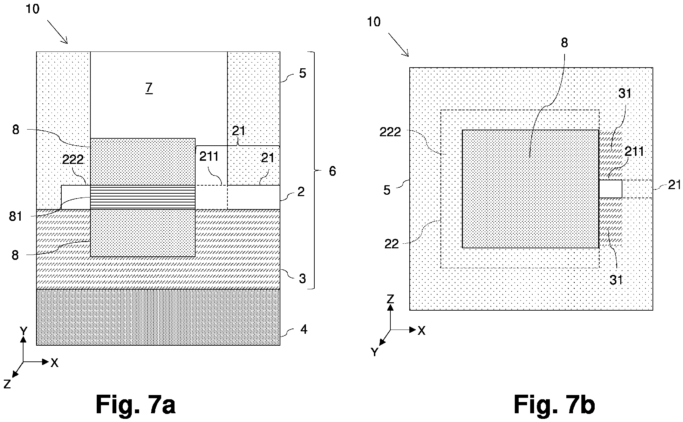

The integrated photonic circuit 10 shown in Fig. 6a and 6b represents an intermediate product after the above-described, optional, method step M4 has been performed. Whether step M4, i.e. the 3^{rd} etch using the second etchant, is performed depends on the location of the active region 81 of the active component 8 to be disposed in the cavity 7 on the exposed surface 32, as described in the following Fig. 7. However, in most applications, the active region is within a stack of layers, so that typically, etching step M4 is required.

It can be seen that in this embodiment, the cavity 7 extends into the lower cladding layer 3 by a predetermined depth D. Such a depth may be etched in the order of several µm with a precision of less than 100 nm, preferably less than 20 nm.

Fig. 7a-b shows a schematic illustration of a side view and a top view of an integrated photonic circuit 10 according to an embodiment of the invention.

Fig. 7a shows a side view, i.e. a sectional view in an X-Y-plane of the integrated photonic circuit 10, and Fig. 7b shows a top view in an X-Z-plane of the integrated photonic circuit 10. The shown embodiment of the integrated photonic circuit 10 is based on and compatible with the method for fabricating an integrated photonic circuit 10 as described above.

Fig. 7a and 7b thus shows the integrated photonic circuit 10 after method step M5, as described above. Here, an active component 8 is bonded on the exposed surface 32 of the lower cladding 3. The active component 8 comprises an active region 81, which is optically coupled to the waveguide portion 21. In further embodiments, instead of an active component 8, a passive component 8 such as a micro lens or micro mirror may be bonded on the exposed surface 32 of the lower cladding or on a waveguide portion 21 of the photonic layer 2.

In some embodiments, the active component 8 is a laser comprising a gain region as active region 81. In further embodiments, the active component 8 is an electro-optic modulator, e.g. comprising a Pockels cell as the active region 81. In further embodiments, the active component 8 is a detector.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present inventions is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiments. In addition, in this disclosure, the terms "comprise" or "comprising" do not exclude other elements or steps, the terms "a" or "one" do not exclude a plural number, and the term "or" means either or both.

Furthermore, characteristics or steps which have been described may also be used in combination with other characteristics or steps and in any order, unless the disclosure or context suggests otherwise. This disclosure hereby incorporates by reference the complete disclosure of any patent or application from which it claims benefit or priority.

### LIST OF USED REFERENCE SIGNS

- 1: integrated photonic platform
- 2: photonic layer
- 4: substrate
- 5: upper cladding layer
- 6: waveguide structure
- 7: resulting cavity
- 7: cavity
- 8: optical (passive or active) component
- 10: integrated photonic circuit
- 21: SiN waveguide portion
- 21: waveguide portion
- 21: waveguide portion
- 22: etch stop portion
- 31: portion of the lower cladding layer
- 32: exposed surface
- 32: surface of the lower cladding layer
- 81: active region
- 211: portion of the waveguide portion
- 212: waveguide tip
- 222: embedded portion
- D: predetermined depth

## Claims

1. Method for fabricating an integrated photonic platform (1), comprising providing (M11) a substrate (4);
depositing (M12) a lower cladding layer (3) made of a first material on the substrate (4);
depositing (M13) a photonic layer (2) made of a second material on the lower cladding (3); and
patterning (M14) the photonic layer (2) to form a waveguide portion (21) and an etch stop portion (22), wherein the waveguide portion (21) is formed to guide a defined optical mode substantially inside the second material, wherein the etch stop portion (22) is formed as a defined area of the photonic layer (2).

2. Method according to claim 1, wherein the etch stop portion (22) is formed as a defined area configured as space holder for integrating an optical component (8).

3. Method according to claim 1 or 2, wherein the first material is silicon dioxide, SiO2, and the second material is silicon nitride, SiN, and/or
further comprising annealing the waveguide portion (21) at a temperature greater or equal to 900 degree Celsius.

4. Method according to any of the previous claims, further comprising depositing (M15) an upper cladding layer (5) made of the first material on the photonic layer (2) to define a waveguide structure (6) comprising the lower cladding layer (3), the photonic layer (2) and the upper cladding layer (5).

5. Method for fabricating an integrated photonic circuit (10),
providing (M1) an integrated photonic platform (1), in particular by the method of claim 4, comprising a waveguide structure (6) disposed on a substrate (4), wherein the waveguide structure (6) includes a lower cladding layer (3) made of a first material disposed on the substrate (4), a photonic layer (2) made of a second material disposed on the lower cladding (3), and an upper cladding layer (5) made of the first material on the photonic layer (2), wherein the photonic layer (2) comprises a waveguide portion (21) and an etch stop portion (22), wherein the waveguide portion (21) is configured to guide a defined optical mode substantially inside the second material, wherein the etch stop portion (22) is configured as a defined area of the photonic layer (2), wherein the first material is configured as an etch stop for a first etchant and the second material configured as an etch stop for a second etchant, etching (M2), by using the second etchant, a portion of the upper cladding layer (5) to expose at least partly the etch stop portion (22) of the photonic layer (2), thereby forming a cavity (7); and
etching (M3), by using the first etchant, the exposed part of the etch stop portion (22) of the photonic layer (2) to expose the lower cladding layer (3).

6. Method according to claim 5, further comprising etching (M4), by using the second etchant, a portion of the lower cladding layer (3) inside the cavity (7) to a predetermined depth (D).

7. Method according to claim 5 or 6, wherein when etching (M2) the upper cladding layer (5) by using the second etchant, etching the upper cladding layer (5) on a removed part of the photonic layer (2) such that a portion (31) of the lower cladding (3) is exposed adjacent to the etch stop portion (22) and the waveguide portion (21),
wherein the exposed portion (31) of the lower cladding layer (3) in particular is arranged on lateral sides of a portion (211) of the waveguide portion (21), which is exposed after etching the upper cladding layer (5) using the second etchant.

8. Method according to any of claims 5 to 7, wherein when etching (M3) the etch stop portion (22), a waveguide tip(212) suitable for optical edge coupling is formed in the cavity (7).

9. Method according to any of claims 5 to 8, further comprising bonding (M5) an optical component (8) having an active region (81) on a surface (32) of the exposed lower cladding (3) such that an optical mode from the waveguide portion (21) is optically coupled to the active region (81) of the optical component (8), wherein the optical component (8) in particular is an active component (8), preferably a laser or an electro-optic modulator.

10. Method according to claims 8 and 9, wherein the active region (81) of the optical component (8) is optically coupled to the waveguide portion (21) through the waveguide tip (212) formed in the cavity (7).

11. Integrated photonic platform (1), comprising
a substrate (4),
a lower cladding layer (3) made of a first material disposed on the substrate (4), and
a photonic layer (2) made of a second material disposed on the lower cladding layer (4), wherein the photonic layer (2) includes a waveguide portion (21) and an etch stop portion (22), wherein the waveguide portion (21) is configured to guide a defined optical mode substantially inside the second material, wherein the etch stop portion (22) is a defined area of the photonic layer (2).

12. Integrated photonic platform, further comprising an upper cladding layer (5) made of the first material on the photonic layer (2) defining a waveguide structure (6) comprising the lower cladding layer (3), the photonic layer (2) and the upper cladding layer (5), wherein the first material preferably is silicon dioxide, SiO2, and the second material preferably is silicon nitride, SiN.

13. Integrated photonic circuit (10), in particular manufactured with the method according to claim 5, comprising
an integrated photonic platform (1), in particular the integrated photonic platform according to claim 12, the integrated photonic platform (1) comprising a waveguide structure (6) disposed on a substrate (4), the waveguide structure (6) including a lower cladding layer (3) made of a first material disposed on the substrate (4), a photonic layer (2) made of a second material disposed on the lower cladding (3), and an upper cladding layer (5) made of the first material on the photonic layer (2), wherein the photonic layer (2) has a waveguide portion (21) configured to guide a defined optical mode substantially inside the second material, wherein the second material is configured as an etch stop layer for a second etchant,
wherein a cavity (7) is formed in the waveguide structure (6), the cavity (7) extending in the upper cladding layer (5) and the photonic layer (2) to expose the lower cladding layer (3).

14. Integrated photonic circuit according to claim 13, wherein the cavity (7) extends into the lower cladding layer (3) by a predetermined depth (D).

15. Integrated photonic circuit according to claim 13 or 14, further comprising an optical component (8) bonded on a surface (32) of the exposed lower cladding (3), wherein the optical component (8) in particular is configured as an active component (8) comprising an active region (81), wherein the active region (81) is optically coupled to the waveguide portion (21),
wherein the active component (8) preferably is one of a laser and an electro-optic modulator.
